(19) Europäisches Patentamt / European Patent Office / Office européen des brevets

(11) **EP 4 062 141 B1**

(12) **EUROPEAN PATENT SPECIFICATION**

(45) Date of publication and mention
of the grant of the patent:
**03.01.2024 Bulletin 2024/01**

(21) Application number: **19805284.7**

(22) Date of filing: **18.11.2019**

(51) International Patent Classification (IPC):
**G01L 27/00** (2006.01)  **F02D 41/00** (2006.01)
**F02D 41/22** (2006.01)  **F02D 41/28** (2006.01)
**F02D 35/02** (2006.01)

(52) Cooperative Patent Classification (CPC):
**G01L 27/002; F02D 35/023; F02D 35/024;**
**F02D 41/009; F02D 41/222;** F02D 2041/281;
Y02T 10/40

(86) International application number:
**PCT/EP2019/081609**

(87) International publication number:
**WO 2021/098937 (27.05.2021 Gazette 2021/21)**

(54) **A METHOD OF DETECTING A DEVIATION IN OPERATION OF A PRESSURE SENSOR FOR INTERNAL COMBUSTION PISTON ENGINE AND COMPUTER READABLE MEMORY DEVICE FOR DETECTING A DEVIATION IN OPERATION OF A PRESSURE SENSOR**

VERFAHREN ZUR ERKENNUNG EINER ABWEICHUNG BEIM BETRIEB EINES DRUCKSENSORS FÜR EINEN INNENVERBRENNUNGSKOLBENMOTOR UND EINEN LESBAREN SPEICHERGERÄT ZUM ERKENNEN EINER ABWEICHUNG IM BETRIEB EINES DRUCKSENSORS

PROCÉDÉ DE DÉTECTION D'UNE DÉVIATION EN FONCTIONNEMENT D'UN CAPTEUR DE PRESSION POUR MOTEUR À PISTON À COMBUSTION INTERNE ET DISPOSITIF DE MÉMOIRE LISIBLE PAR ORDINATEUR POUR DÉTECTER UNE DÉVIATION EN FONCTIONNEMENT D'UN CAPTEUR DE PRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.09.2022 Bulletin 2022/39**

(73) Proprietor: **Wärtsilä Finland Oy**
**65100 Vaasa (FI)**

(72) Inventor: **KAAS, Tom**
**65100 Vaasa (FI)**

(74) Representative: **Genip Oy**
**Heikinkatu 7**
**48100 Kotka (FI)**

(56) References cited:
**EP-A1- 2 778 379      JP-A- 2011 157 850**
**US-A1- 2015 285 710**

## Description

### Technical field

The present invention relates to a method processing measurement signal of a pressure sensor for internal combustion piston engine.

Invention relates also to computer readable memory device for detecting a deviation in operation of a pressure sensor.

### Background art

Measurement of pressure in cylinder of an internal combustion piston engine is commonly used in modern engines provided with computer implemented control system. And, recently the usage of cylinder pressure measurement is an integrated part of an engine control system, wherein various parameters calculated from the on-line cylinder pressure measurement, characterising the combustion process in the cylinder, e.g. indicated mean effective pressure, heat release and knock, are used as feedback in closed control loops configured to the control system.

Therefore, it is important that the cylinder pressure measurement is, as far as possible, exact and robust, both considering phasing in respect to crank angle (piston position) and absolute value, otherwise calculation of correct combustion feedback signals is jeopardized. In practical circumstances the cylinder pressure sensors are not absolute pressure sensors and the output must be referenced to absolute pressure at some point of the signal processing. This is commonly referred to as "pegging".

There are several known ways of compensating for the zero level offset, pegging, so as to peg the cylinder pressure curve to represent absolute pressure. The output from cylinder pressure sensor is usually an electric signal, either a current or a voltage, and the sensitivity of the sensor is known, i.e. current or voltage dependency to pressure. The needed zero level offset can be determined at suitable crank angle range where the pressure in the cylinder is known by other means, for example during scavenging or intake phase, such that the current or voltage at said crank angle is set to represent the known pressure. This will shift the dependency between the electrical signal and the pressure to represent absolute presser over the whole cycle.

US2007277591 A1 discloses a method of determining a cylinder pressure in a cylinder of a piston engine. It is disclosed therein that the method is capable of performing suitable failsafe processing according to a degree of determined abnormality in the pressure sensor. Document discloses that correlation between sensor value Sr and pressure value P is can be presented using factors gain A, and offset B such that a correlation P = A x Sr + B applies. US2007277591 A1 discloses a method of determining the gain A and offset B factors. The offset B factor is suggested to be defined making use of polytropic change during compression stroke using polytropic exponent, which is obtained based cylinder or intake pressure and engine rotation speed for example, as mapped and stored information. The gain A is suggested to be provided based on ratio of change in the cylinder pressure during compression to change in the pressure of intake air in the receiver. This is problematic since it has been noted that the pressure of the intake air does to reflect the pressure in the cylinder accurately enough.

Document also suggests that determined values for gain A and offset B factors need to be within a predetermined ranges, between minimum and maximum values and deviation from such predetermined range triggers a particular process. This is only referred to as being a comparison to a predetermined value for which the document does not provide and special instruction, other than being decided based on engine design data, experimental data or the like.

Thus the method leaves still room for improvement. Other relevant prior art documents are patent documents JP 2011 157850 A and US 2015/285710 A1. In particolar, the Japanese patent document discloses an alternative approach for the estimation of sensor sensitivity.

An object of the invention is to provide method of detecting a deviation in operation of a pressure sensor for internal combustion piston engine by means of which the measurement reliability can be considerably improved compared to the prior art solutions.

### Disclosure of the Invention

Objects of the invention can be met substantially as is disclosed in the independent claims and in the other claims describing more details of different embodiments of the invention.

A method of detecting a deviation in operation of a pressure sensor having a sensor specific sensitivity $s_m$ for converting electric signal obtainable from the sensor into pressure, in internal combustion piston engine, comprising

- reading a first measurement signal $p_{1,m}$ and a second measurement signal $p_{2,m}$ from the pressure sensor at a first crank angle position and at a second crank angle position respectively, during compression stroke of a cylinder of the engine when the combustion chamber is closed,

- determining a first volume $V_1$ of the combustion chamber at the first crank angle position, and

- determining a second volume $V_2$ of the combustion chamber at the second crank angle position,

determining an estimated isentropic proportionality constant C by applying the values of the measurement signals and respective combustion chamber volumes to the formula

$$C = \frac{\sum V^{-\gamma} \cdot \sum p_m - \sum p_m \cdot V^{-\gamma} \cdot \sum 1}{\sum V^{-\gamma} \cdot \sum V^{-\gamma} - \sum V^{-2\gamma} \cdot \sum 1},$$

in which $\gamma$ is the ratio of the heat capacity at constant pressure to heat capacity at constant volume of gas in the combustion chamber during compression,

and when using electric signal U of the first and the second measurement signal obtained from the pressure sensor,

determining an estimated sensor sensitivity using the formula

$$S = \frac{C \cdot (V_2^{-\gamma} - V_1^{-\gamma})}{U_2 - U_1}$$

where C is the estimated isentropic proportionality constant,

V is the cylinder volume, and

$\gamma$ is the ratio of the heat capacity at constant pressure $C_p$ to heat capacity at constant volume Cv,

or alternatively, when using pressure signal p from the first and the second measurement signal converted from an electric signal,

determining an estimated sensor sensitivity using the formula

$$S = s_m \cdot \frac{C \cdot (V_2^{-\gamma} - V_1^{-\gamma})}{p_{2,m} - p_{1,m}},$$

where C is the estimated isentropic proportionality constant,

V is the cylinder volume,

$\gamma$ is the ratio of the heat capacity at constant pressure $C_p$ to heat ca-pacity at constant volume Cv, and

$s_m$ is the constant, sensor specific sensitivity used during the measurement,

wherein the estimated sensor sensitivity S is used for detecting a deviation in the sensor measurement signal sensitivity by performing a quality check in respect to the sensor specific sensitivity $s_m$.

Thus, when only electrical signal is usable, the method of detecting a deviation in operation of a pressure sensor having a sensor specific sensitivity $s_m$ for converting electric signal obtainable from the sensor into pressure, in internal combustion piston engine, comprising

- reading a first measurement signal $p_{1,m}$ and a second measurement signal $p_{2,m}$ from the pressure sensor at a first crank angle position and at a second crank angle position respectively, during compression stroke of a cylinder of the engine when the combustion chamber is closed,

- determining a first volume $V_1$ of the combustion chamber at the first crank angle position, and

- determining a second volume $V_2$ of the combustion chamber at the second crank angle position,

determining an estimated isentropic proportionality constant C by applying the values of the measurement signals and respective combustion chamber volumes to the formula

$$C = \frac{\sum V^{-\gamma} \cdot \sum p_m - \sum p_m \cdot V^{-\gamma} \cdot \sum 1}{\sum V^{-\gamma} \cdot \sum V^{-\gamma} - \sum V^{-2\gamma} \cdot \sum 1},$$

in which $\gamma$ is the ratio of the heat capacity at constant pressure to heat capacity at constant volume of gas in the combustion chamber during compression,

determining an estimated sensor sensitivity using the formula

$$S = \frac{C \cdot (V_2^{-\gamma} - V_1^{-\gamma})}{U_2 - U_1}$$

where C is the estimated isentropic proportionality constant,

V is the cylinder volume, and

$\gamma$ is the ratio of the heat capacity at constant pressure $C_p$ to heat capacity at constant volume Cv,

wherein the estimated sensor sensitivity S is used for detecting a deviation in the sensor measurement signal sensitivity by performing a quality check in respect to the sensor specific sensitivity $s_m$.

Alternatively, when only pressure signal p is usable method of detecting a deviation in operation of a pressure sensor having a sensor specific sensitivity $s_m$ for converting electric signal obtainable from the sensor into pressure, in internal combustion piston engine, comprising

- reading a first measurement signal $p_{1,m}$ and a second measurement signal $p_{2,m}$ from the pressure sensor at a first crank angle position and at a second crank angle position respectively, during compression stroke of a cylinder of the engine when the combustion chamber is closed,

- determining a first volume $V_1$ of the combustion chamber at the first crank angle position, and

- determining a second volume $V_2$ of the combustion chamber at the second crank angle position,

determining an estimated isentropic proportionality constant C by applying the values of the measurement signals and respective combustion chamber volumes to the formula

$$C = \frac{\sum V^{-\gamma} \cdot \sum p_m - \sum p_m \cdot V^{-\gamma} \cdot \sum 1}{\sum V^{-\gamma} \cdot \sum V^{-\gamma} - \sum V^{-2\gamma} \cdot \sum 1},$$

in which $\gamma$ is the ratio of the heat capacity at constant pressure to heat capacity at constant volume of gas in the combustion chamber during compression,

determining an estimated sensor sensitivity using the formula

$$S = s_m \cdot \frac{C \cdot (V_2^{-\gamma} - V_1^{-\gamma})}{p_{2,m} - p_{1,m}},$$

where C is the estimated isentropic proportionality constant,

V is the cylinder volume,

$\gamma$ is the ratio of the heat capacity at constant pressure $C_p$ to heat ca-pacity at constant volume $Cv$, and

$s_m$ is the constant, sensor specific sensitivity used during the measurement,

wherein the estimated sensor sensitivity S is used for detecting a deviation in the sensor measurement signal sensitivity by performing a quality check in respect to the sensor specific sensitivity $s_m$.

The estimated sensor sensitivity S can be utilized in evaluation of the permanent change in the condition of the sensor. This way, by comparing the estimated sensor sensitivity S to the sensor specific sensitivity $s_m$ it is possible to obtain exact and robust measurements, both considering phasing in respect to the crank angle and absolute value, because degraded or fouled sensors can be detected.

By means of using only accurate pressure information in the control of the engine many parameters calculated from the cylinder pressure measurement characterising the combustion process in the cylinder, e.g. indicated mean effective pressure, heat release and knock provide accurate feedback in closed control loops used for controlling the operation of the engine.

The invention provides alternative solutions such that the method can be practised either using substantially unprocessed electric signal U obtained from the pressure sensor or using pressure signal converted from the electric signal.

According to an embodiment of the invention the quality check is performed by calculating difference between the sensor specific sensitivity $s_m$, and the estimated sensor sensitivity S, and setting a maximum allowed difference between the values, and in case the reminder is greater than the maximum allowed difference, excessive deviation of the operation of the sensor is confirmed.

According to an embodiment of the invention the quality check is performed by calculating ratio between the estimated sensor sensitivity S and the sensor specific sensitivity $s_m$, and, setting a maximum allowed quotient between the values, and in case the ratio is greater than the maximum allowed quotient, excessive deviation of the operation of the sensor is confirmed.

According to an embodiment of the invention the method is practised such that during a single compression stroke of a cylinder of the engine, when the combustion chamber is closed

- measurement signals ( $p_{1,m}$, $p_{2.m}$ .... $p_{n-1,m}$, $p_{n,m}$) from the pressure sensor are read at more than two predetermined crank angle positions, volumes ($V_1$, $V_2$, ...$V_{n-1}$, $V_n$) of the combustion chamber are determined at the predetermined crank angle positions, the measurement signal - cylinder volume pairs forming an array of measurements,
- the estimated isentropic proportionality constant C is determined using the values of measurement signals and respective combustion chamber volumes, estimated sensor sensitivities ($S_1$, $S_2$, $S_n$) are determined to the array of measurements, and
- the estimated sensors sensitivity (S) is an algebrally manipulated value of the estimated sensor sensitivities.

According to an embodiment of the estimated sensor sensitivity S is determined such that the first crank angle and the second crank angle represent successive crank angles in an array of measurements.

Thus, when having measurement pairs $p_1,V_1$; $p_2,V_2$; $p_3$, $V_3$, ..., $p_n,V_n$ at the points of $\vartheta_1$ to $\vartheta_n$ the estimated sensor sensitivity S values are

$$S_1 = \frac{C \cdot (V_2^{-\gamma} - V_1^{-\gamma})}{p_{2,m} - p_{1,m}}, \quad S_2 = \frac{C \cdot (V_3^{-\gamma} - V_2^{-\gamma})}{p_{3,m} - p_{2,m}},$$

$$S_3 = \frac{C \cdot (V_4^{-\gamma} - V_3^{-\gamma})}{p_{4,m} - p_{3m}}, \quad .... , \quad S_n = \frac{C \cdot (V_n^{-\gamma} - V_{n-1}^{-\gamma})}{p_{n,m} - p_{n-1,m}}$$

According to another embodiment of the invention the estimated sensor sensitivity S is determined such that the first crank angle represents always the first one of the measurements at crank angle farthest from the top dead center and the second crank angle in the array of measurements represent second, third, and $n^{th}$ crank angle in the array of measurements.

In this embodiment the estimated sensor sensitivity S values are

$$s_n = \frac{C \cdot (V_n^{-\gamma} - V_1^{-\gamma})}{p_{n,m} - p_{1,m}}, \quad s_{n-1} = \frac{C \cdot (V_{n-1}^{-\gamma} - V_1^{-\gamma})}{p_{n-1,m} - p_{1,m}}, \quad \ldots$$

$$s_2 = \frac{C \cdot (V_3^{-\gamma} - V_1^{-\gamma})}{p_{3,m} - p_{1m}}, \quad s_1 = \frac{C \cdot (V_2^{-\gamma} - V_1^{-\gamma})}{p_{2,m} - p_{1m}}$$

The estimated sensor sensitivity (S) is advantageously an average of the estimated sensor sensitivities ($S_1$, $S_2$, $S_n$) determined to the array of measurements.

An internal combustion piston engine may be controlled making use of a computer readable memory device comprising instructions which, when executed by a computer, cause the computer to carry out a method of any one of the recited method claims.

Thus, even if the sensitivity of the cylinder pressure sensor may degrade, e.g. the characteristics of the measurement membrane within the sensor changes due to aging or the measurement tip is covered with combustion residuals such as soot, it is possible by means of the invention to practise online monitoring of the sensor sensitivity to provide an indication if the sensitivity has changed so much that the measurement can no-longer be trusted and the sensor should either be replaced, serviced or cleaned.

The isentropic proportionality constant C and zero level offset used in the method can be derived as follows. Firstly, the measured cylinder pressure value $p_m$ can be expressed as a combination of the real, or true, cylinder pressure and the sensor bias, i.e. zero level offset.

$$p_m = p + \Delta p \tag{1}$$

where

    $p$ is the real cylinder pressure and
    $\Delta p$ is the cylinder pressure sensor zero level offset expressed in pressure.

According to polytropical expression, known to apply in a closed volume system during compression or expansion substantially accurately, it is known that

$$pV^\gamma = C, \tag{2}$$

where

    $p$ is the real cylinder pressure,
    $V$ is the cylinder volume,
    $\gamma$ is the ratio of the heat capacity at constant pressure ($C_p$) to heat capacity at constant volume (Cv), when considered as isentropic process and C is an isentropic proportionality constant. Solving the real pressure p out of the equation (2) gives

$$p = C \cdot V^{-\gamma} \tag{3}$$

Applying this results with the equation (1) an estimate for the measured pressure is obtained

$$\tilde{p}_m = C \cdot V^{-\gamma} + \Delta p \tag{4}$$

The problem of determining the zero level offset $\Delta p$ is according to the invention formulated as a least squares problem, i.e. minimising the value of the following cost function (difference between real and estimated pressure)

$$J(C, \Delta p) = \frac{1}{2} \sum (p_m - \tilde{p}_m)^2 = \frac{1}{2} \sum (p_m - C \cdot V^{-\gamma} - \Delta p)^2, \tag{5}$$

for a predetermined number of pressure measurements at different crank angles during the cylinder compression stage, when the combustion chamber is closed i.e. all of the gas exchange valves of the cylinder are closed. The cost function (5) is minimised by taking the partial derivatives of the cost function and setting them to zero.

The partial derivative of cost function relative to isentropic proportionality constant C is

$$\frac{dJ}{dC} = \frac{2}{2}\sum(p_m - C \cdot V^{-\gamma} - \Delta p) \cdot (-V^{-\gamma}) = \sum(-p_m \cdot V^{-\gamma} + C \cdot V^{-2\gamma} + \Delta p \cdot V^{-\gamma})$$

$$= -\sum p_m \cdot V^{-\gamma} + C \cdot \sum V^{-2\gamma} + \Delta p \cdot \sum V^{-\gamma} \qquad (6)$$

The partial derivative of cost function relative to the zero level offset $\Delta p$ is

$$\frac{dJ}{d\Delta p} = \frac{2}{2}\sum(p_m - C \cdot V^{-\gamma} - \Delta p) \cdot (-1) = \sum(-p_m + C \cdot V^{-\gamma} + \Delta p)$$

$$= -\sum p_m + C \cdot \sum V^{-\gamma} + \Delta p \cdot \sum 1 \qquad (7)$$

Setting the partial derivatives to zero give a system of equations, consisting of two equations and two unknown parameters and thus the system of equations can be solved.

$$-\sum p_m \cdot V^{-\gamma} + C \cdot \sum V^{-2\gamma} + \Delta p \cdot \sum V^{-\gamma} = 0 \qquad (8)$$

$$-\sum p_m + C \cdot \sum V^{-\gamma} + \Delta p \cdot \sum 1 = 0 \qquad (9)$$

Solving for $\Delta p$ from the system of equations (8) and (9) results in equation (10)

$$\Delta p = \frac{\sum V^{-\gamma} \sum p_m \cdot V^{-\gamma} - \sum V^{-2\gamma} \sum p_m}{\sum V^{-\gamma} \sum V^{-\gamma} - \sum V^{-2\gamma} \sum 1} \qquad (10)$$

Thus, according to the method of the invention the zero level offset can be estimated from the measurement of pressure values during compression stroke for use in pegging the pressure measurement to correct value, if so desired.

More importantly, in a similar manner the isentropic proportionality constant C can also be estimated, by solving the system of equations (8) and (9) for C, resulting in

$$C = \frac{\sum V^{-\gamma} \cdot \sum p_m - \sum p_m \cdot V^{-\gamma} \cdot \sum 1}{\sum V^{-\gamma} \cdot \sum V^{-\gamma} - \sum V^{-2\gamma} \cdot \sum 1} \qquad (11)$$

Thus, the isentropic proportionality constant $C$ is obtained by minimising the value of the cost function based on difference betweena real and estimated cylinder pressure, by settin he partial derivative of cost function relative to isentropic proportionality constant C to zero, and settin the partial derivative of cost function relative to the zero level offset $\Delta p$ to zero and solving the system of equations in respect to the isentropic proportionality constant C

The estimated sensor sensitivity used in the method can be derived as follows. Considering generally two cylinder pressure measurements $p_1$ and $p_2$ at different crank angles during compression stoke. When it is assumed that the sensitivity of the sensor is s, then the corresponding pressure measurements can be expressed using formulas

$$p_1 = s \cdot U_1 + \Delta p \qquad (12)$$

$$p_2 = s \cdot U_2 + \Delta p \tag{13}$$

where

s is the sensor sensitivity,
$U$ is the electrical signal from the sensor, such as voltage or electric current, and
$\Delta p$ is the cylinder pressure sensor's zero level offset.

Solving equation (12) for zero level offset $\Delta p$ results in

$$\Delta p = p_1 - s \cdot U_1. \tag{14}$$

Inserting the result (14) into the equation (13) and solving for the sensitivity results in

$$s = \frac{p_2 - p_1}{U_2 - U_1} \tag{15}$$

Again, the isentropic relation is used to replace the true pressure values $p_1$ and $p_2$,

$$\left. \begin{array}{l} p_1 = C \cdot V_1^{-\gamma} \\ p_2 = C \cdot V_2^{-\gamma} \end{array} \right\} \Rightarrow$$

.

$$s = \frac{C \cdot (V_2^{-\gamma} - V_1^{-\gamma})}{U_2 - U_1} \tag{16}$$

where $C$ is the isentropic proportionality constant, for determination of which the equation (11) is used,

V is the cylinder volume, and
$\gamma$ is the ratio of the heat capacity at constant pressure (Cp) to heat capacity at constant volume (Cv), when considered as isentropic process
Hence an estimated sensor sensitivity s can be expressed using electrical signal of the sensor. This represents an unprocessed electrical signal which may be either voltage or electric current

Should the electrical signal be processed such that it is converted to represent pressure for particular measurements, the values of electrical signal from the sensor can be rewritten as, or converted to pressure as follows

$$p_{1,m} = s_m \cdot U_1 + \Delta p \tag{17}$$

$$p_{2,m} = s_m \cdot U_2 + \Delta p \tag{18}$$

where $s_m$ is the constant sensor specific sensitivity used during the measurement, this is made available by the manufacturer of the sensor. Solving equation (17) and (18) for the electrical value of the sensor and calculating $U_1$-$U_2$ results in

$$U_2 - U_1 = \frac{p_{2,m} - \Delta p_m}{s_m} - \frac{p_{1,m} - \Delta p_m}{s_m} = \frac{p_{2,m} - p_{1,m}}{s_m} \tag{19}$$

where $p_{1,m}$ and $p_{2,m}$ is the measured pressure values at crank angles $\vartheta_1$ and $\vartheta_2$ respectively and $s_m$ is the sensor sensitivity used during the measurement to convert the electric signal from the sensor to pressure. The electric signal can be either voltage signal or current signal generated by the sensor in response to the pressure.
Inserting the formula of $U_2$ - $U_2$ in (19) into equation (16) results in the following expression for the estimated sensor sensitivity

$$s = s_m \cdot \frac{C \cdot (V_2{}^{-\gamma} - V_1{}^{-\gamma})}{p_{2,m} - p_{1,m}} \qquad (20)$$

Equation (20) provides an alternative manner of obtaining the estimated sensor sensitivity s by using pressure value instead of electrical signal of the sensor.

If so desired, the equation (20) can also be rewritten into form

$$s = \frac{C \cdot (V_2{}^{-\gamma} - V_1{}^{-\gamma})}{\frac{U_{2,m}}{s_m} - \frac{U_{1,m}}{s_m}} \qquad (20')$$

where instead of measured pressure values it is possible to use detected electric values of the sensors.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

**Brief Description of Drawings**

In the following, the invention will be described with reference to the accompanying exemplary, schematic drawings, in which

Figure 1 illustrates general principle of forming a pressure signal from an electric signal of a pressure sensor according to an embodiment of the invention,
Figure 2 illustrates sampling of values during compression stroke for implementing the method according to the invention,
Figure 3 illustrates a block diagram illustrating the steps processing measurement signal of a pressure sensor for internal combustion piston engine, and
Figure 4 illustrates a process chart illustrating the method according to an embodiment of the invention.

**Detailed Description of Drawings**

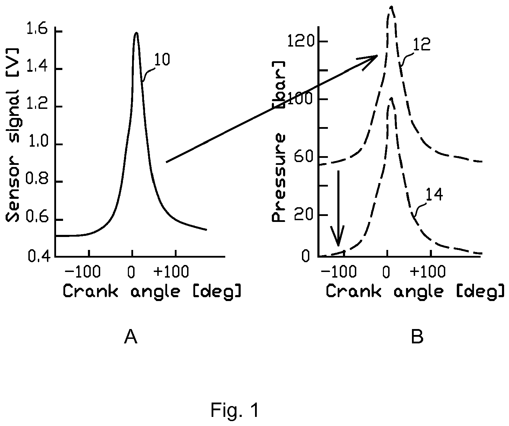

Figure 1 depicts schematically general principle of forming a pressure signal from an electric signal obtained from a pressure sensor. The chart A shows an exemplary curve 10 representing voltage, or electric potential obtained from cylinder pressure sensor in an internal combustion piston engine during compression stroke around top dead center when the engine is motoring. In this case the sensor is configured to produce voltage as its measurement signal. Such sensor may alternatively be configured to produce current as its measurement signal as well. Electric signal is not very illustrative for analysis purposes and various characteristics of engine are based pressure value and therefore the electric signal is converted to indicate pressure, for example in bar or MPa. The voltage value is multiplied by a factor called herein as sensor sensitivity which is expressed in unit of [bar/V] (may be also [MPa/V], [bar/A] or [MPa/A] etc.), such that when the voltage value is multiplied with the sensor sensitivity a value in pressure units is obtained. The curve 10 of view A when converted into the pressure unit is illustrated in the view B as the curve 12. Next the curve 12 is pegged, by adding the zero level offset $\Delta p$ to the pressure curve 12, to reference pressure level, usually atmospheric pressure. This is illustrated by the curve 14, which is shown in the view B below the curve 12.

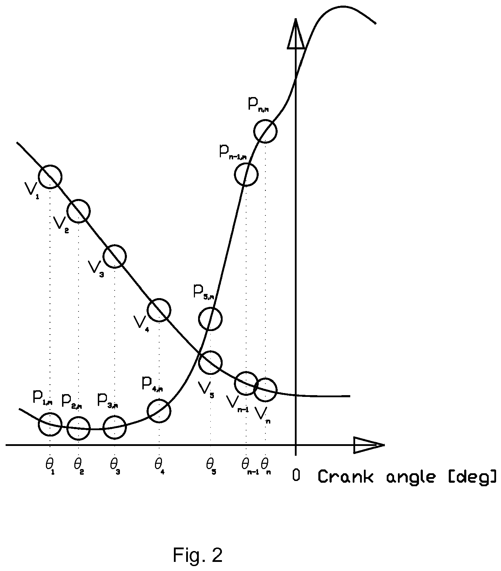

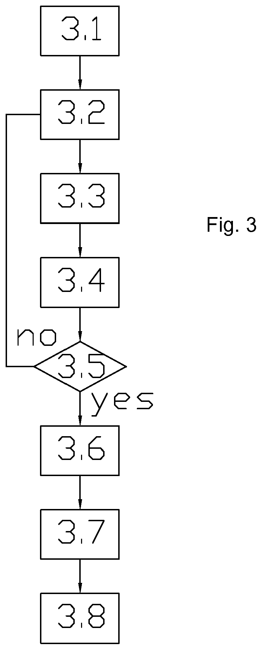

Figure 2 illustrates the manner how the sensor sensitivity s and zero level offset $\Delta p$ are obtained by means of the method according to the invention. Figure 3 show a flow chart example of the method of processing measurement signal of a pressure sensor which is attached to a piston engine to detect pressure in a cylinder, or combustion chamber of the engine. The flow chart also illustrates the result of executable instructions executed in by a computer configured to control the operation of an internal combustion piston engine. The method according to the invention is practised for each cylinder - or for each pressure sensor of the engine, independently.

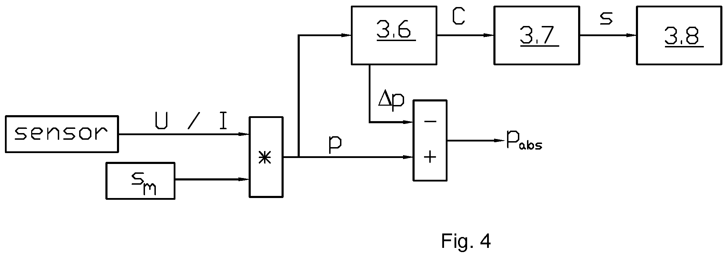

Referring to the figures 3 and 4 the method of processing measurement signal of a pressure, i.e. detecting a deviation in operation of the pressure sensor comprises a step 3.1, selecting the crank angle range from $\vartheta_1$ to $\vartheta_n$, see figure 2. The crank angle points can be such that the interval between the readings is constant. It may also be justified to select the reading frequency in variable manner, for example such that reading frequency increases towards the dead top center. Each crank angle selected to be a reading point is associated to measurement signal reading $p_1$ to $p_n$ and to volume $V_1$ to $V_n$ of the closed combustion chamber.

The method comprises the step 3.2 of reading a measurement signal $p_{n,m}$ or $U_{n,m}$ from the pressure sensor at a first crank angle position $\vartheta_1$ during compression stroke of a cylinder of the engine when the combustion chamber is closed, and step 3.3 determining a volume $V_n$ of the combustion chamber at the first crank angle position. The measurement signal can be either electrical signal or pressure value obtained from the electrical signal (voltage or amperage). In the following it is referred to pressure signal as an example. As can be seen from the figure 4 the pressure signal can be obtained by multiplying the electrical signal with a sensor specific sensitivity $s_m$. Subsequently, the measured signal and the respective combustion chamber volume are stored in step 3.4. In next step 3.5 it is checked if all measuring points are read, and if not the control set back to the step 3.2 of reading the measurement signal $p_{n+1,m}$, step 3.3 determining the volume $V_{n+1}$ of the combustion chamber, and so on, until all the crank angle points $\vartheta_1$ to $\vartheta_n$ have been dealt with. The steps 3.2, 3.3, 3.4 result in an array of measurements data

| $\vartheta_1$ | $\vartheta_2$ | ... | $\vartheta_{n-1}$ | $\vartheta_n$ |
|---|---|---|---|---|
| $p_1$ | $p_2$ | ... | $p_{n-1}$ | $p_n$ |
| $V_1$ | $V_1$ | ... | $V_{n-1}$ | $V_n$ |

When the step 3.5, checking if all measurement points are read, gives positive result, an estimated isentropic proportionality constant C is determined in the step 3.6 by applying the values of measurement signals and respective combustion chamber volumes obtained and stored during the step 3.4 to the formula

$$C = \frac{\sum V^{-\gamma} \cdot \sum p_m - \sum p_m \cdot V^{-\gamma} \cdot \sum 1}{\sum V^{-\gamma} \cdot \sum V^{-\gamma} - \sum V^{-2\gamma} \cdot \sum 1} \;,$$

in which $\gamma$ is the ratio of the heat capacity at constant pressure ($C_p$) to heat capacity at constant volume ($C_v$) of gas in the combustion chamber, and next in step 3.7 further an estimated sensor sensitivity S is determined using the formula

$$S = \frac{C \cdot (V_n^{-\gamma} - V_1^{-\gamma})}{p_{n,m} - p_{1,m}}$$

, where the estimated sensor sensitivity S is determined such that the first crank angle represents always the first one of the measurements at crank angle farthest from the top dead center and the second crank angle in the array of measurements represent second, third, and $n^{th}$ crank angle in the array of measurements.

$$S = \frac{C \cdot (V_n^{-\gamma} - V_{n-1}^{-\gamma})}{p_{n,m} - p_{n-1,m}}$$

Alternatively, a formula may be used, where the estimated sensor sensitivity S is determined such that the first crank angle and the second crank angle represent successive crank angles in an array of measurement. When applied to the array of volume and measurement signal values obtained in the steps 3.2 - 3.4 several values $s_n$ are obtained and an average of the values is advantageously used for further processing in detecting a deviation in operation of a pressure sensor.

Even if the steps are shown in a particular sequence in the figure 3, it is also possible to gather or read all the measurement signals first and only after that determine respective volumes of the combustion chamber.

Finally a quality check is performed to the estimated sensor sensitivity S in step 3.8.baced on which it is determined if the operation of the sensor deviates excessively from what is expected. Figure 4 also shown the calculation of corrected or absolute pressure using the zero level offset $\Delta p$.

**Claims**

1. A method of detecting a deviation in operation of a pressure sensor having a sensor specific sensitivity ($s_m$) for converting electric signal obtainable from the sensor into pressure, in internal combustion piston engine, which method comprising

   - reading a first measurement signal ($p_{1,m}$) and a second measurement signal ($p_{2,m}$) from the pressure sensor at a first crank angle position and at a second crank angle position, respectively, during compression stroke of a cylinder of the engine when the combustion chamber is closed,
   - determining a first volume ($V_1$) of the combustion chamber at the first crank angle position, and

- determining a second volume ($V_2$) of the combustion chamber at the second crank angle position,

determining an estimated isentropic proportionality constant C by applying the values of the measurement signals and respective combustion chamber volumes to the formula

$$C = \frac{\sum V^{-\gamma} \cdot \sum p_m - \sum p_m \cdot V^{-\gamma} \cdot \sum 1}{\sum V^{-\gamma} \cdot \sum V^{-\gamma} - \sum V^{-2\gamma} \cdot \sum 1},$$

in which $\gamma$ is the ratio of the heat capacity at constant pressure to heat capacity at constant volume of gas in the combustion chamber during compression,
and when using electric signal (U) of the first and the second measurement signal obtained from the pressure sensor,
determining an estimated sensor sensitivity (S) and use the estimated sensor sensitivity for detecting a deviation in the sensor measurement signal sensitivity by performing a quality check in respect to the sensor specific sensitivity ($s_m$).
**characterized by**
determining the estimated sensor sensitivity using the formula

$$s = \frac{C \cdot (V_2^{-\gamma} - V_1^{-\gamma})}{U_2 - U_1}$$

where C is the estimated isentropic proportionality constant,
V is the cylinder volume, and
$\gamma$ is the ratio of the heat capacity at constant pressure ($C_p$) to heat capacity at constant volume (Cv),

or alternatively when alternatively using pressure signal (p) from the first and the second measurement signal converted from an electric signal,

determining an estimated sensor sensitivity using the formula

$$s = s_m \cdot \frac{C \cdot (V_2^{-\gamma} - V_1^{-\gamma})}{p_{2,m} - p_{1,m}},$$

where C is the estimated isentropic proportionality constant,
V is the cylinder volume,
$\gamma$ is the ratio of the heat capacity at constant pressure ($C_p$) to heat capacity at constant volume ($C_V$), and
$s_m$ is the constant, sensor specific sensitivity used during the measurement

wherein thus estimated sensor sensitivity S is used for detecting a deviation in the sensor measurement signal sensitivity by performing a quality check in respect to the sensor specific sensitivity ($s_m$).

2. A method of detecting a deviation in operation of a pressure sensor according to claim 1, **characterized in that** the quality check is performed by calculating difference between the sensor specific sensitivity ($s_m$), and the estimated sensor sensitivity (S), and setting a maximum allowed difference between the values, and in case the reminder is greaterthan the maximum allowed difference, excessive deviation of the operation of the sensor is confirmed.

3. A method of detecting a deviation in operation of a pressure sensor according to claim 1, **characterized in that** the quality check is performed by calculating ratio between the estimated sensor sensitivity (S) and the sensor specific sensitivity ($s_m$), and, setting a maximum allowed quotient between the values, and in case the ratio is greater than the maximum allowed quotient, excessive deviation of the operation of the sensor is confirmed.

4. A method detecting a deviation in operation of a pressure sensor according to claim 1, **characterized in that** during a single compression stroke of a cylinder of the engine, when the combustion chamber is closed

- measurement signals ($p_{1,m}$, $P_{2,m}$ .... $p_{n-1,m}$ $p_{n,m}$) from the pressure sensor are read at more than two predetermined crank angle positions, volumes ($V_1$, $V_2$, ...$V_{n-1}$, $V_n$) of the combustion chamber are determined at the predetermined crank angle positions, the measurement signal - cylinder volume pairs forming an array of measurements,
- the estimated isentropic proportionality constant C is determined using the values of measurement signals and respective combustion chamber volumes,
- estimated sensor sensitivities ($S_1$, $S_2$, $S_n$) are determined to the array of measurements, and
- the estimated sensors sensitivity (S) is an algebrally manipulated value of the estimated sensor sensitivities.

5. A method detecting a deviation in operation of a pressure sensor according to claim 4, **characterized in that** estimated sensor sensitivity (S) is determined such that the first crank angle and the second crank angle represent successive crank angles in an array of measurements.

6. A method detecting a deviation in operation of a pressure sensor according to claim 4, **characterized in that** the estimated sensor sensitivity (S) is determined such that the first crank angle represents the first one of the measurements at crank angle farthest from the top dead center and the second crank angle in the array of measurements represent second, third, and $n^{th}$ crank angle in the array of measurements.

7. A method detecting a deviation in operation of a pressure sensor according to claim 4, **characterized in that** the estimated sensor sensitivity (S) is an average of the estimated sensor sensitivities (S1, S2, Sn) determined to the array of measurements.

8. A method detecting a deviation in operation of a pressure sensor according to anyone of the preceding claims, **characterized in that** the isentropic proportionality constant C is obtained by minimising the value of the cost function based on difference between a real and estimated cylinder pressure, by setting he partial derivative of cost function relative to isentropic proportionality constant C to zero, and setting the partial derivative of cost function relative to the zero level offset $\Delta p$ to zero and solving the system of equations in respect to the isentropic proportionality constant C.

9. A computer readable memory device for detecting a deviation in operation of a pressure sensor comprising instructions which, when executed by a computer, cause the computer to carry out a method of any one of the preceding claims.

**Patentansprüche**

1. Verfahren zum Erkennen einer Abweichung beim Betrieb eines Drucksensors mit einer sensorspezifischen Sensitivität ($s_m$), um ein elektrisches Signal, das von dem Sensor erhältlich ist, in einen Druck in einer Brennkraftkolbenmaschine (Verbrennungskolbenmotor) umzuwandeln, wobei das Verfahren umfasst:

- Lesen eines ersten Messsignals ($p_{1,m}$) und eines zweiten Messsignals ($p_{2,m}$) von dem Drucksensor bei einer ersten Kurbelwinkelposition bzw. bei einer zweiten Kurbelwinkelposition während eines Verdichtungshubs eines Zylinders der Maschine, wenn die Brennkammer geschlossen ist,
- Bestimmen eines ersten Volumens ($V_1$) der Brennkammer bei der ersten Kurbelwinkelposition, und
- Bestimmen eines zweiten Volumens ($V_2$) der Brennkammer bei der zweiten Kurbelwinkelposition,

Bestimmen einer geschätzten isentropen Proportionalitätskonstante C, indem die Werte der Messsignale und der jeweiligen Brennkammervolumen auf die folgende Formel angewandt werden:

$$C = \frac{\sum V^{-\gamma} \cdot \sum p_m - \sum p_m \cdot V^{-\gamma} \cdot \sum 1}{\sum V^{-\gamma} \cdot \sum V^{-\gamma} - \sum V^{-2\gamma} \cdot \sum 1},$$

in der $\gamma$ das Verhältnis der Wärmekapazität bei konstantem Druck zu der Wärmekapazität bei konstantem Volumen des Gases in der Brennkammer während der Verdichtung ist,
und dann, wenn ein elektrisches Signal (U) des ersten und des zweiten Messsignals, das jeweils von dem Drucksensor erhalten wird, verwendet wird,
dann ein Bestimmen einer geschätzten Sensorsensitivität (S) und Verwendung der geschätzten Sensorsensitivität zum Erkennen einer Abweichung in der Sensitivität des Sensormesssignals, indem ein Qualitätscheck in Bezug auf die sensorspezifische Sensitivität ($s_m$) durchgeführt wird,

**gekennzeichnet durch**

ein Bestimmen der geschätzten Sensorsensitivität unter Verwendung der folgenden Formel:

$$S = \frac{C \cdot \left(V_2^{-\gamma} - V_1^{-\gamma}\right)}{U_2 - U_1}$$

wobei C die geschätzte isentrope Proportionalitätskonstante ist,

V das Zylindervolumen ist, und

$\gamma$ das Verhältnis der Wärmekapazität bei konstantem Druck ($c_p$) zu der Wärmekapazität bei konstantem Volumen ($c_v$) ist,

oder alternativ, wenn alternativ ein Drucksignal (p) von dem ersten und dem zweiten Messsignal, das von einem elektrischen Signal umgewandelt worden ist, verwendet wird,

dann alternativ ein Bestimmen der geschätzten Sensorsensitivität unter Verwendung der folgenden Formel:

$$S = s_m \cdot \frac{C \cdot \left(V_2^{-\gamma} - V_1^{-\gamma}\right)}{p_{2,m} - p_{1,m}}$$

wobei C die geschätzte isentrope Proportionalitätskonstante ist,

V das Zylindervolumen ist,

$\gamma$ das Verhältnis der Wärmekapazität bei konstantem Druck ($c_p$) zu der Wärmekapazität bei konstantem Volumen ($c_v$) ist, und

$s_m$ die konstante sensorspezifische Sensitivität ist, die während der Messung verwendet wird,

wobei die geschätzte Sensorsensitivität S zum Erkennen einer Abweichung in der Sensitivität des Sensormesssignals verwendet wird, indem ein Qualitätscheck in Bezug auf die sensorspezifische Sensitivität ($s_m$) durchgeführt wird.

2. Verfahren zum Erkennen einer Abweichung beim Betrieb eines Drucksensors nach Anspruch 1, **dadurch gekennzeichnet, dass** der Qualitätscheck durchgeführt wird, indem die Differenz zwischen der sensorspezifischen Sensitivität ($s_m$) und der geschätzten Sensorsensitivität (S) berechnet wird, und indem ein Maximum einer zulässigen Differenz zwischen den Werten festgesetzt wird, und dass dann für den Fall, dass der Differenzrest größer als das Maximum der zulässigen Differenz ist, eine übermäßige Abweisung beim Betrieb des Sensors bestätigt wird.

3. Verfahren zum Erkennen einer Abweichung beim Betrieb eines Drucksensors nach Anspruch 1, **dadurch gekennzeichnet, dass** der Qualitätscheck durchgeführt wird, indem das Verhältnis zwischen der geschätzten Sensorsensitivität (S) und der sensorspezifischen Sensitivität ($s_m$) berechnet wird, und indem ein Maximum eines zulässigen Quotienten zwischen den Werten festgesetzt wird, und dass dann für den Fall, dass das Verhältnis größer als das Maximum des zulässigen Quotienten ist, eine übermäßige Abweisung beim Betrieb des Sensors bestätigt wird.

4. Verfahren zum Erkennen einer Abweichung beim Betrieb eines Drucksensors nach Anspruch 1, **dadurch gekennzeichnet, dass** während eines einzelnen Verdichtungshubs eines Zylinders der Maschine, wenn die Brennkammer der Maschine geschlossen ist,

- Messsignale ($p_{1,m}$, $p_{2,m}$, ... $p_{n-1,m}$, $p_{n,m}$) von dem Drucksensor an mehr als zwei vorgegebenen Kurbelwinkelpositionen gelesen werden, wobei die Volumen ($V_1$, $V_2$, ... , $V_{n-1}$, $V_n$) der Brennkammer an den vorgegebenen Kurbelwinkelpositionen bestimmt werden, wobei die jeweils zugeordneten Werte von Messsignal/Zylindervolumen Paare eines Feldes von Messungen ergeben,

- die geschätzte isentrope Proportionalitätskonstante C unter Verwendung der Werte der Messsignale und der jeweiligen Brennkammervolumen bestimmt wird,

- geschätzte Sensorsensitivitäten ($S_1$, $S_2$, $S_n$) an dem Feld von Messungen bestimmt werden, und

- die geschätzte Sensorsensitivität (S) ein algebraisch manipulierter Wert der geschätzten Sensorsensitivitäten ist.

5. Verfahren zum Erkennen einer Abweichung beim Betrieb eines Drucksensors nach Anspruch 4, **dadurch gekennzeichnet, dass** die geschätzte Sensorsensitivität (S) derart bestimmt wird, dass der erste Kurbelwinkel und der zweite Kurbelwinkel aufeinander folgende Kurbelwinkel in einem Feld von Messungen darstellen.

**6.** Verfahren zum Erkennen einer Abweichung beim Betrieb eines Drucksensors nach Anspruch 4, **dadurch gekennzeichnet, dass** die geschätzte Sensorsensitivität (S) derart bestimmt wird, dass der erste Kurbelwinkel den ersten der Messungen bei einem Kurbelwinkel darstellt, der am weitesten von dem oberen Totpunkt entfernt ist, und dass der zweite Kurbelwinkel in dem Feld von Messungen den zweiten, dritten und den n-ten Kurbelwinkel in dem Feld von Messungen darstellt.

**7.** Verfahren zum Erkennen einer Abweichung beim Betrieb eines Drucksensors nach Anspruch 4, **dadurch gekennzeichnet, dass** die geschätzte Sensorsensitivität (S) ein Durchschnitt der geschätzten Sensorsensitivitäten ($S_1$, $S_2$, $S_n$) ist, die aus dem Feld von Messungen bestimmt werden.

**8.** Verfahren zum Erkennen einer Abweichung beim Betrieb eines Drucksensors nach einem der vorhergehenden Ansprüche, **dadurch gekennzeichnet, dass** die geschätzte isentrope Proportionalitätskonstante C erhalten wird, indem der Wert der Kostenfunktion auf der Grundlage einer Differenz zwischen einem tatsächlichen und einem geschätzten Zylinderdruck minimiert wird, indem eine partielle Ableitung der Kostenfunktion bezüglich zu der isentropen Proportionalitätskonstanten C auf Null gesetzt wird, und indem die partielle Ableitung der Kostenfunktion bezüglich der Nullniveauverschiebung $\Delta$p auf Null gesetzt wird, und indem das System von Gleichungen bezüglich der isentropen Proportionalitätskonstante C gelöst wird.

**9.** Computerlesbare Speichervorrichtung zum Erkennen einer Abweichung beim Betrieb eines Drucksensors, der Anweisungen umfasst, die, wenn sie auf einem Computer ausgeführt werden, den Computer veranlassen, ein Verfahren nach einem der vorhergehenden Ansprüche auszuführen.

**Revendications**

**1.** Procédé de détection d'une déviation lors du fonctionnement d'un capteur de pression ayant une sensibilité spécifique de capteur ($s_m$) pour convertir un signal électrique qui peut être obtenu du capteur en une pression, dans un moteur à pistons à combustion interne, ledit procédé comprenant

- la lecture d'un premier signal de mesure ($p_{1,m}$) et d'un deuxième signal de mesure ($p_{2,m}$) provenant du capteur de pression à une première position d'angle de vilebrequin et à une deuxième position d'angle de vilebrequin, respectivement, durant la course de compression d'un cylindre du moteur lorsque la chambre de combustion est fermée,
- la détermination d'un premier volume ($V_1$) de la chambre de combustion à la première position d'angle de vilebrequin, et
- la détermination d'un deuxième volume ($V_2$) de la chambre de combustion à la deuxième position d'angle de vilebrequin,

la détermination d'une constante de proportionnalité isentropique estimée C en appliquant les valeurs des signaux de mesure et les volumes de chambre de combustion respectifs à la formule

$$C = \frac{\sum V^{-\gamma} \cdot \sum p_m - \sum p_m \cdot V^{-\gamma} \cdot \sum 1}{\sum V^{-\gamma} \cdot \sum V^{-\gamma} - \sum V^{-2\gamma} \cdot \sum 1},$$

dans laquelle $\gamma$ est le rapport de la capacité calorifique à pression constante par la capacité calorifique à volume constant du gaz dans la chambre de combustion durant la compression,
et lors de l'utilisation du signal électrique (U) des premier et deuxième signaux de mesure obtenus à partir du capteur de pression,
la détermination d'une sensibilité estimée du capteur (S) et l'utilisation de la sensibilité estimée du capteur pour détecter une déviation dans la sensibilité du signal de mesure du capteur en mettant en œuvre un contrôle de qualité par rapport à la sensibilité spécifique du capteur ($s_m$),
**caractérisé par**
la détermination de la sensibilité estimée du capteur à l'aide de la formule

$$S = \frac{C \cdot \left(V_2^{-\gamma} - V_1^{-\gamma}\right)}{U_2 - U_1}$$

où C est la constante de proportionnalité isentropique estimée,

V est le volume du cylindre, et

$\gamma$ est le rapport de la capacité calorifique à pression constante ($C_p$) par la capacité calorifique à volume constant ($C_v$),

ou bien en utilisant alternativement le signal de pression (p) provenant des premier et deuxième signaux de mesure converti à partir d'un signal électrique,

la détermination d'une sensibilité estimée du capteur à l'aide de la formule

$$S = s_m \cdot \frac{c \cdot (V_2^{-\gamma} - V_1^{-\gamma})}{p_{2,m} - p_{1,m}}$$

où C est la constante de proportionnalité isentropique estimée,

V est le volume du cylindre,

$\gamma$ est le rapport de la capacité calorifique à pression constante ($C_p$) par la capacité calorifique à volume constant ($C_v$), et

$s_m$ est la sensibilité spécifique du capteur constante utilisée durant la mesure,

dans lequel la sensibilité estimée du capteur S est ainsi utilisée pour détecter une déviation dans la sensibilité du signal de mesure du capteur en mettant en œuvre un contrôle de qualité par rapport à la sensibilité spécifique du capteur ($s_m$).

2. Procédé de détection d'une déviation lors du fonctionnement d'un capteur de pression selon la revendication 1, **caractérisé en ce que** le contrôle de qualité est mis en œuvre en calculant la différence entre la sensibilité spécifique du capteur ($s_m$) et la sensibilité estimée du capteur (S), et en réglant une différence maximale autorisée entre les valeurs, et dans le cas où le reste est supérieur à la différence maximale autorisée, une déviation excessive du fonctionnement du capteur est confirmée.

3. Procédé de détection d'une déviation lors du fonctionnement d'un capteur de pression selon la revendication 1, **caractérisé en ce que** le contrôle de qualité est mis en œuvre en calculant le rapport entre la sensibilité estimée du capteur (S) et la sensibilité spécifique du capteur ($s_m$), et en réglant un quotient maximal autorisé entre les valeurs, et dans le cas où le rapport est supérieur au quotient maximal autorisé, une déviation excessive lors du fonctionnement du capteur est confirmée.

4. Procédé de détection d'une déviation lors du fonctionnement d'un capteur de pression selon la revendication 1, **caractérisé en ce que** durant une course de compression unique d'un cylindre du moteur, lorsque la chambre de combustion est fermée,

- les signaux de mesure ($p_{1,m}$, $p_{2,m}$, ... $p_{n-1,m}$, $p_{n,m}$) provenant du capteur de pression sont lus à plus de deux positions d'angle de vilebrequin prédéterminées, les volumes ($V_1$, $V_2$, ... $V_{n-1}$, $V_n$) de la chambre de combustion sont déterminés aux positions d'angle de vilebrequin prédéterminées, les couples signal de mesure - volume du cylindre formant un ensemble de mesures,
- la constante de proportionnalité isentropique estimée C est déterminée à partir des valeurs des signaux de mesure et des volumes respectifs des chambres de combustion,
- les sensibilités estimées des capteurs ($S_1$, $S_2$, $S_n$) sont déterminées à partir de l'ensemble de mesures, et
- la sensibilité estimée des capteurs (S) est une valeur manipulée algébriquement des sensibilités estimées des capteurs.

5. Procédé de détection d'une déviation lors du fonctionnement d'un capteur de pression selon la revendication 4, **caractérisé en ce que** la sensibilité estimée du capteur (S) est déterminée de telle sorte que le premier angle de vilebrequin et le deuxième angle de vilebrequin représentent des angles de vilebrequin successifs dans un ensemble de mesures.

6. Procédé de détection d'une déviation lors du fonctionnement d'un capteur de pression selon la revendication 4, **caractérisé en ce que** la sensibilité estimée du capteur (S) est déterminée de telle sorte que le premier angle de vilebrequin représente la première des mesures à l'angle de vilebrequin le plus éloigné du point mort haut, et le deuxième angle de vilebrequin dans l'ensemble de mesures représente les deuxième, troisième et n$^{ième}$ angles de vilebrequin dans l'ensemble de mesures.

7. Procédé de détection d'une déviation lors du fonctionnement d'un capteur de pression selon la revendication 4, **caractérisé en ce que** la sensibilité estimée du capteur (S) est une moyenne des sensibilités estimées du capteur ($S_1$, $S_2$, $S_n$) déterminées à partir de l'ensemble de mesures.

8. Procédé de détection d'une déviation lors du fonctionnement d'un capteur de pression selon l'une quelconque des revendications précédentes, **caractérisé en ce que** la constante de proportionnalité isentropique C est obtenue en minimisant la valeur de la fonction de coût sur la base d'une différence entre une pression réelle et une pression estimée du cylindre, en réglant la dérivée partielle de la fonction de coût par rapport à la constante de proportionnalité isentropique C à zéro, et en réglant la dérivée partielle de la fonction de coût par rapport au décalage du niveau zéro $\Delta p$ à zéro et en résolvant le système d'équations par rapport à la constante de proportionnalité isentropique C.

9. Dispositif de mémoire lisible par un ordinateur pour détecter une déviation lors du fonctionnement d'un capteur de pression, comprenant des instructions qui, lorsqu'elles sont exécutées par un ordinateur, commandent à l'ordinateur d'exécuter un procédé selon l'une quelconque des revendications précédentes.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007277591 A1
- JP 2011157850 A
- US 2015285710 A1